# EUROPÄISCHE PATENTSCHRIFT

(11) **EP 2 184 497 B1**
(45) Veröffentlichungstag und Bekanntmachung des Hinweises auf die Patenterteilung: **22.06.2011**
(21) Anmeldenummer: 08019466.5
(22) Anmeldetag: 07.11.2008
(51) Int. Cl.: F16B 11/00

(54) **Befestigung für Kunststoffplatten**
Fixing for plastic plates
Fixation pour plaques de plastique

(43) Veröffentlichungstag der Anmeldung: 12.05.2010
(73) Patentinhaber: Kalenborn International GmbH & Co.KG, 52560 Vettelschloss (DE)
(72) Erfinder: Buchholz, Herrmann-Josef, 53578 Windhagen (DE)
(74) Vertreter: Knoop, Philipp

(56) Entgegenhaltungen:
- EP-A- 0 870 933
- DE-A1-102005 005 134

## Beschreibung

Die vorliegende Erfindung betrifft ein Befestigungselement zur Befestigung von Kunststoffplatten, insbesondere Gleitförderauskleidungsplatten, an einem metallischen Träger, wobei das Befestigungselement als Plattendurchtrittselement ausgebildet ist und wenigstens eine Kontaktfläche zur Kunststoffplatte aufweist.

Viele Förder- oder Lagergüter erfordern aufgrund ihrer physikalischen oder chemischen Eigenschaften einen Schutz der sie lagernden oder fördernden Einrichtungen oder eine Erhöhung der Gleitfähigkeit im Kontaktbereich zu den Wandungen der jeweiligen Einrichtung. Beispielsweise neigt Kohlegranulat in Bunkern oder Silos zu Anbackungen an der Bunker- oder Silowand. Derartige Anbackungen werden durch auf der Bunkerwand angebrachte Kunststoffplatten verhindert. An diese Kunststoffplatten werden neben Glätte der Oberfläche und geringem Gewicht oftmals weitere Anforderungen gestellt. So müssen sie in bestimmten Anwendungsbereichen schwerentflammbar, chemikalienresistent oder temperaturresistent sein. Als Materialien für die Kunststoffplatten kommen daher Polyethylene, Polypropylene oder Polyvinylchloride in Betracht. Diese Kunststoffplatten werden durch die Lager- oder Fördergüter verschlissen und müssen in regelmäßigen Abständen ausgetauscht werden.

Im Stand der Technik werden eine ganze Reihe von Befestigungsarten für Verschleißschutzplatten beschrieben. Die DE 100 47 095 beschreibt für eine Plattenbefestigung einer verschleißbeanspruchten Maschine einen in die Maschine eingeschraubten Gewindebolzen, der die Verschleißplatte durchsetzt und in der Verschleißschutzplatte so versenkt ist, dass sein Kopf nicht über die Verschleißschutzoberfläche hinausragt.

Die DE 10 2005 005 134 beschreibt eine Verschleißschutzplatte aus Hartmetall oder Keramik, die mittels eines auf ihr befestigten zylindrischen Bolzens in Form einer Hohlniet oder eines Gewindebolzens in eine Bohrung des Trägers eingreift, wobei der Bolzen auf der Rückseite der Verschleißschutzplatte angelötet ist. Er wird von der Rückseite des Trägers her geschraubt, genietet oder gelötet. Dieser Stand der Technik hält eine Schweißung aufgrund der auftretenden thermischen Spannungen für nachteilig.

Schließlich ist aus der DE 43 14 512 eine kraftschlüssige Verbindung zur Befestigung von Verschleißkacheln bekannt, bei der ein Durchttrittskörper mit konischem Abschnitt sowohl durch eine Verschleißkachel als auch einen Träger hindurchtritt und von der Rückseite des Trägers her mittels eines Klemmelements so verspannt wird, dass die Verschleißkachel auf den Träger gepresst wird.

Keines dieser Dokumente betrifft eine Kunststoffplatte zur Gleitförderung. Darüber hinaus ist an dem geschilderten Stand der Technik nachteilig, dass er nur für solche Vorrichtungen geeignet ist, die von ihrer Rückseite her zugänglich sind.

Es ist daher Aufgabe der vorliegenden Erfindung, eine Befestigungsvorrichtung für Kunststoffplatten, insbesondere Gleitförderauskleidungsplatten anzugeben, die einfach gebaut und schnell und einfach anbringbar ist.

Diese Aufgabe wird durch die Merkmale des Anspruchs 1 gelöst, wobei das Plattendurchtrittselement einteilig ausgebildet ist, eine Anlagefläche zur Anlage an der, der Kunststoffplatte zugewandten Oberfläche des Trägers aufweist, und wenigstens eine Durchgangsöffnung aufweist, an der das Plattendurchtrittselement stoffschlüssig an dem Träger befestigbar ist. Mit besonderem Vorteil schlägt die Erfindung die Einteiligkeit des Plattendurchtrittselementes vor. Hierdurch wird das Plattendurchtrittselements besonders einfach, eine Montage entfällt. Dadurch, dass eine Anlagefläche zur Anlage an dem Träger vorgesehen ist, kann das Plattendurchtrittselement über diese Anlagefläche verkippsicher und großflächig stoffschlüssig an dem Träger befestigt werden, wobei die erfinderische Maßnahme einer Durchgangsöffnung durch das Plattendurchtrittselement ermöglicht, gleichsam im Inneren des Plattendurchtrittselements zu arbeiten, so dass die umgebenden Kunststoffplatten vor thermischem Schaden geschützt sind.

Weil das Plattendurchtrittselement eine zur Dicke der zur befestigenden Kunststoffplatte korrespondierende Gesamtlänge aufweist, so schließt es mit großem Vorteil in der Ebene der Oberfläche der Gleitförderauskleidungsplatte ab. Ein den Verschleiß erhöhender Höhenabsatz wird mit Vorteil vermieden.

Mit besonderem Vorteil schlägt die Erfindung eine konisch ausgebildete Kontaktfläche des Plattendurchtrittselements zur zu befestigenden Kunststoffplatte auf. Über die konische Kontaktfläche erfolgt ein besonders gleichmäßiger Krafteintrag in die Kunststoffplatte, so dass das relativ weiche Kunststoffmaterial nicht verformt oder zum Fließen angeregt wird. Erfindungsgemäß könnte die Kontaktfläche jedoch auch gestuft ausgebildet sein. In diesem Fall wäre die korrespondierende Kontaktfläche der Kunststoffplatte ebenfalls gestuft ausgebildet.

In Ausgestaltung der Erfindung ist vorgesehen, dass das Plattendurchtrittselement als Kegelstumpf ausgebildet ist. Dies ist eine besonders einfache und robuste Ausgestaltung, die leicht herstellbar und besonders stabil ist. Die zum Träger orientierte Deckfläche des Kegelstumpfes weist bevorzugt einen Durchmesser von nicht weniger als 3/7 des Durchmessers der Grundfläche des Kegelstumpfs auf. Um scharfkantige Stellen zu vermeiden, werden die Übergänge von Mantelfläche zu Grund- und Deckfläche mit einem Radius ausgebildet.

Ist die wenigstens eine Durchtrittsöffnung als wenigstens eine konische Durchgangsbohrung im Plattendurchtrittselement ausgebildet, so wird mit großem Vorteil das vorteilhafte Krafteinleitungsprinzip der Grenzfläche: Kunststoffplatte-Plattendurchtrittselement auch im Inneren des Plattendurchtrittselement an der Grenzfläche: Plattendurchtrittselement-Haftmittel wiederholt.

In Ausgestaltung der Erfindung ist vorgesehen, dass das Befestigungselement eine Wandstärke zwischen 5 mm und 8 mm aufweist und/oder die Durchgangsbohrung einen inneren Durchmesser zwischen 8 mm und 14 mm aufweist. Mit dieser Ausgestaltung ist eine ausreichend große Materialstärke vorgegeben, um möglichen thermischen Belastungen der angrenzenden Kunststoffplatten beim stoffschlüssigen Befestigen entgegenzutreten. Gleichzeitig ist das erfindungsgemäße Befestigungselement somit besonders stabil.

Diese Stabilität wird auch durch die Wahl des Materials gewährleistet, die erfindungsgemäß ein Stahl bzw. ein rostfreier Stahl ist.

Schließlich schlägt die Erfindung noch ein Verfahren zur Befestigung von Kunststoffplatten, insbesondere Gleitförderauskleidungsplatten, an einem metallischen Träger, vor, welches die Schritte enthält:
a) Anlegen einer Kunststoffplatte an den Träger, b) Einsetzen eines Durchtrittskörpers wie vorbeschrieben in die Kunststoffplatte aus Schritt a), c) stoffschlüssiges Befestigen des Durchtrittskörpers an dem Träger durch die wenigstens eine Durchgangsöffnung des Durchtrittskörpers, wobei der Schritt c) als Schweißung, insbesondere VA-Schweißung ausgeführt wird.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:

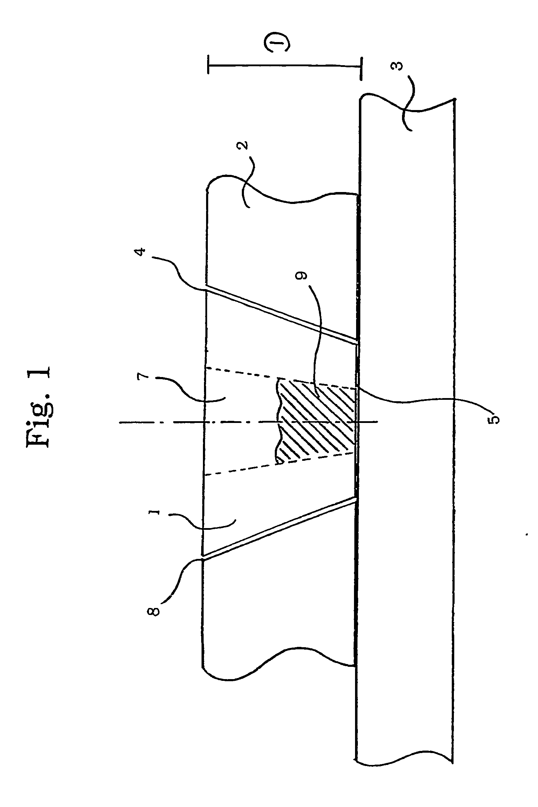

- Fig. 1:: einen Schnitt durch eine erfindungsgemäße Befestigungsvorrichtung

Für das Verlegen von Gleitförderauskleidungsplatten ist eine möglichst spaltarme und ebene Verbindung zweier Platten besonders wichtig, die sich üblicherweise in ihren Randbereichen überlappen. Die Befestigung benachbarter Gleitförderauskleidungsplatten erfolgt in der Regel so, dass die überlappende Platte die unterlappende Platte mittels eines, die überlappende Platte durchsetzenden Niederzugelements fixiert. Bei der Ausführungsform gemäß Fig. 1 ist das Niederzugelement als Kegelstumpf mit einer konischen Kontaktfläche 4 zur Kunststoffplatte 2 ausgebildet. Die konische Kontaktfläche 4 ist dabei die Mantelfläche des Kegelstumpfes. Die Kunststoffplatte 2 weist eine konisch verlaufende Durchtrittsöffnung 8 auf, an deren konischer Wand die konische Kontaktfläche 4 anliegt.

Figur 1 zeigt, wie die durch die Deckfläche des Kegelstumpfes gebildete Anlagefläche 5 des erfindungsgemäßen Befestigungselementes 1 auf dem Träger 3 aufliegt. Das Befestigungselement 1 weist bei diesem Ausführungsbeispiel eine mittig angeordnete konische Durchgangsbohrung 7 auf, die mit einer Weite von 8 mm an der Anlagefläche 5 endet. Das dargestellte Plattendurchtrittselement 1 weist eine Dicke D auf, die exakt derjenigen der zu befestigenden Kunststoffplatte entspricht. Hierdurch wird eine Stufung in der Oberfläche zum Lagergut vermieden und damit dessen Gleiten erleichtert. Erfindungsgemäß ist ein kleiner Ringspalt zwischen Befestigungselement 1 und Kunststoffplatte 2 vorgesehen. Wie Figur 1 zu entnehmen ist, ist das Befestigungselement 1 in seiner Durchgangsbohrung 7 mittels Schweißmaterials 9 stoffschlüssig an dem Träger 3 befestigt. Die Durchtrittsbohrung 7 kann bis zur vollständigen Dicke D des Befestigungselementes 1 mit Schweißmaterial 9 ausgefüllt sein, jedoch reicht eine Schweißmaterialdicke von 10 mm in der Regel aus. Der sich ergebende Hohlraum setzt sich innerhalb kürzester Zeit mit Lagergut zu, so dass ebenfalls wieder eine einheitliche Gleitebene an der Oberfläche erzeugt wird.

Die Montage des erfindungsgemäßen Befestigungselements 1 erfolgt so, dass eine Kunststoffplatte 2 an einem Träger 3 so angelegt wird, dass sie die benachbarte Platte überlappt. Anschließend wird das kegelstumpfartige Befestigungselement 1 in die Durchtrittsöffnung 8 der Platte 2 eingesetzt und mittels Lochschweißung mit VA-Elektroden stoffschlüssig am Träger 3 befestigt. Üblicherweise weist eine Platte mehrere Durchtrittsöffnungen 8 auf.

### BEZUGSZEICHENLISTE

- 1: Befestigungselement
- 2: Kunststoffplatte
- 3: Träger
- 4: Kontaktfläche
- 5: Anlagefläche
- 7: Durchgangsbohrung
- 8: Durchtrittsöffnung
- 9: Schweißmaterial

## Patentansprüche

1. Befestigungselement (1) zur Befestigung von Kunststoffplatten, insbesondere Gleitförderauskleidungsplatten (2), an einem metallischen Träger (3), wobei das Befestigungselement (1) als Plattendurchtrittselement ausgebildet ist und wenigstens eine Kontaktfläche (4) zur Kunststoffplatte (2) aufweist, **dadurch gekennzeichnet, dass** das Plattendurchtrittselement einteilig ausgebildet ist, eine Anlagefläche (5) zur Anlage an der der Kunststoffplatte (2) zugewandten Oberfläche des Trägers (3) aufweist, und wenigstens eine Durchgangsöffnung aufweist, an der das Plattendurchtrittselement (1) mittels Schweißens stoffschlüssig an dem Träger (3) befestigbar ist, wobei es eine zur Dicke der zu befestigenden Kunststoffplatte korrespondierende Gesamtlänge aufweist und wobei es als Niederzugelement ausgebildet ist.

2. Befestigungselement nach Anspruch 1, **dadurch gekennzeichnet, dass** die Kontaktfläche (4) konisch ausgebildet ist.

3. Befestigungselement nach Anspruch 1 oder 2, **dadurch gekennzeichnet, dass** es als Kegelstumpf ausgebildet ist.

4. Befestigungselement nach einem der vorhergehenden Ansprüche, **dadurch gekennzeichnet, dass** die wenigstens eine Durchgangsöffnung als wenigstens eine konische Durchgangsbohrung (7) im Plattendurchtrittselement (1) ausgebildet ist.

5. Befestigungselement nach einem der vorhergehenden Ansprüche, **dadurch gekennzeichnet, dass** es eine Wandstärke zwischen 5 und 8 mm aufweist und/oder die Durchgangsbohrung (7) einen inneren Durchmesser zwischen 14 mm und 8 mm aufweist.

6. Befestigungselement nach einem der vorhergehenden Ansprüche, **dadurch gekennzeichnet, dass** es aus einem Stahl, insbesondere VA-Stahl besteht.

7. Verfahren zur Befestigung von Gleitförderauskleidungsplatten, an einem metallischen Träger enthaltend die Schritte:
a) Anlegen einer Kunststoffplatte an den Träger,
b) Einsetzen eines Durchtrittskörpers gemäß einem der Ansprüche 1 bis 7 in die Kunststoffplatte aus Schritt a),
c) stoffschlüssiges Befestigen des Durchtrittskörpers an dem Träger durch die wenigstens eine Durchgangsöffnung als Schweißung, insbesondere VA-Schweißung erfolgt.

## Claims

1. A fastening element (1) for fastening plastic plates, in particular slide-conveying lining plates (2), to a metallic carrier (3), wherein the fastening element (1) is constituted as a plate pass-through element and comprises at least one contact face (4) with the plastic plate (2), **characterised in that** the plate pass-through element is constituted in one piece, comprises a seating face (5) for seating on the surface of the carrier (3) facing the plastic plate (2), and at least one through-opening, at which the plate pass-through element (1) can be fastened to the carrier (3) in a firmly bonded manner by means of welding, wherein it has a total length corresponding to the thickness of the plastic plate to be fastened and wherein it is constituted as a hold-down element.

2. The fastening element according to claim 1, **characterised in that** the contact face (4) is formed conically.

3. The fastening element according to claim 1 or 2, **characterised in that** it is formed as a truncated cone.

4. The fastening element according to any one of the preceding claims, **characterised in that** the at least one through-opening is formed as at least one conical through-hole (7) in the plate pass-through element (1) .

5. The fastening element according to any one of the preceding claims, **characterised in that** it has a wall thickness between 5 and 8 mm and/or the through-hole (7) has an inner diameter between 14 mm and 8 mm.

6. The fastening element according to any one of the preceding claims, **characterised in that** it is made of steel, especially VA steel.

7. A method for the fastening of slide-conveying lining plates to a metallic carrier, comprising the steps:
a) placing a plastic plate on the carrier,
b) inserting a pass-through body according to any one of claims 1 to 7 into the plastic plate from step a),
c) firmly bonded fastening of the pass-through body to the carrier takes place through the at least one through-opening as a weld joint, in particular a VA weld joint.

## Revendications

1. Elément de fixation (1) pour la fixation de plaques en matière plastique, notamment des plaques d'habillage de convoyeur glissant (2) sur un support métallique (3), l'élément de fixation (1) étant conçu sous la forme d'un élément traversant les plaques et comportant au moins une surface de contact (4) avec la plaque en matière plastique (2), **caractérisé en ce que** l'élément traversant la plaque est conçu en un seul élément, comporte une surface d'appui (5) pour s'appuyer sur la surface du support (3) qui fait face à la plaque en matière plastique (2) sur laquelle l'élément traversant la plaque (1) est susceptible d'être fixé par soudage, par liaison par matière sur le support (3), alors qu'il comporte une longueur total correspondant à l'épaisseur de la plaque en matière en plastique à fixer et qu'il est conçu en tant qu'élément à répression basse.

2. Elément de fixation selon la revendication 1, **caractérisé en ce que** la surface de contact (4) est conçue sous forme conique.

3. Elément de fixation selon la revendication 1 ou 2, **caractérisé en ce qu'**il est conçu sous forme tronconique.

4. Elément de fixation selon l'une quelconque des revendications précédentes, **caractérisé en ce que** l'au moins une ouverture de passage est conçue sous la forme d'au moins un perçage traversant (7).

5. Elément de fixation selon l'une quelconque des revendications précédentes, **caractérisé en ce qu'**il présente une épaisseur de paroi comprise entre 5 et 8 mm et/ou **en ce que** le perçage traversant (7) présente un diamètre compris entre 14 mm et 8 mm.

6. Elément de fixation selon l'une quelconque des revendications précédentes, **caractérisé en ce qu'**il consiste dans un acier, notamment un acier noble.

7. Procédé de fixation de plaque d'habillage de convoyeur glissant sur un support métallique, comportant les étampes :
a) application d'une plaque en matière plastique sur le support,
b) insertion du corps traversant selon l'une quelconque des revendications 1 à 7 dans la plaque en matière plastique de l'étape a),
c) fixation par liaison de matière du corps traversant sur le support, à travers l'au moins une ouverture de passage sous forme de soudage, notamment de soudage d'acier noble.
